# EUROPEAN PATENT APPLICATION

(11) **EP 4 478 675 A1**
(43) Date of publication of application: **18.12.2024**
(21) Application number: 23765933.9
(22) Date of filing: 06.03.2023
(51) Int. Cl.: H04L 41/0677

(54) **NETWORK PERFORMANCE MEASUREMENT METHOD, SYSTEM AND APPARATUS**

(30) Priority: 11.03.2022 CN 202210242665
(71) Applicant: Huawei Technologies Co., Ltd., Shenzhen, Guangdong 518129 (CN)
(72) Inventor: YAN, Siyu, Shenzhen, Guangdong 518129 (CN); LIU, Ning, Shenzhen, Guangdong 518129 (CN)
(74) Representative: Pfenning, Meinig & Partner mbB
(86) International application number: PCT/CN2023/079803
(87) International publication number: WO 2023/169355

(57) **Abstract**

This application discloses a network performance measurement method, system, and apparatus, to enable a switching device to actively perceive a service performance change, and enable a management device to quickly delimit and identify a cause of a service performance exception. This application may be applied to a service telemetry scenario. The switching device obtains a first time of a first packet and a second time of a second packet, where the first packet is an initial packet of a first service object, the second packet is a tail packet of the first service object, the first packet and the second packet are identified by the switching device according to an object identification rule corresponding to the first service object, the first service object indicates a to-be-measured packet exchange phase in a service interaction process between a first device and a second device, and the object identification rule is delivered by the management device to the switching device. The switching device obtains, based on the first time and the second time, object measurement information corresponding to the first service object.

## Description

This application claims priority to Chinese Patent Application No. 202210242665.8, filed with the China National Intellectual Property Administration on March 11, 2022 and entitled "NETWORK PERFORMANCE MEASUREMENT METHOD, SYSTEM, AND APPARATUS", which is incorporated herein by reference in its entirety.

### TECHNICAL FIELD

This application relates to the field of computer network technologies, and in particular, to a network performance measurement method, system, and apparatus.

### BACKGROUND

High-performance services, such as storage, machine learning, and big data analytics, are deployed in a data center, and this poses a higher requirement of a service on network performance assurance.

A network telemetry technology is an important means to find and identify a fault. Currently, a mainstream network telemetry technology is mainly used to measure network indicators (such as a round-trip delay, a packet loss, and a throughput). For example, in an in-band network telemetry (in-band network telemetry, INT) technology, a switching device (which refers to a device that has a packet forwarding function in this application, for example, a switch, a router, or a firewall) samples and replicates a received or forwarded packet. Measurement information (for example, a device ID, ingress and egress ports, and a timestamp) is added to the replicated packet hop by hop that is used as a probe packet. An analysis device can detect a forwarding path delay, a bandwidth, and the like of the packet by analyzing the measurement information carried in the replicated probe packet.

However, the network indicators obtained by monitoring the packet cannot be associated with a service. In this case, the switching device cannot actively, directly, and quickly perceive a service performance change, and the network indicators cannot reflect a degree of impact on service performance. When a service exception occurs, the switching device cannot directly distinguish between network indicators of the service in processes such as on a host side and in a network. As a result, a network problem cannot be quickly delimited and identified.

### SUMMARY

This application provides a network performance measurement method, system, and apparatus, to measure network performance of a service, so that a switching device can actively perceive a service performance change, and quickly delimit and identify a cause of a service performance exception.

According to a first aspect, a network performance measurement method is provided. The method is applied to a switching device, and the switching device is configured to forward a packet between a first device and a second device. The switching device may be a device that has a packet forwarding function, for example, a router, a switch, or a firewall. The switching device obtains a first time of a first packet and a second time of a second packet, and obtains, based on the first time and the second time, object measurement information corresponding to a first service object. The first time is a time at which the switching device receives or forwards the first packet, and the second time is a time at which the switching device receives or forwards the second packet. The first packet is an initial packet of the first service object. The initial packet is a 1st packet of the first service object. The second packet is a tail packet of the first service object. The tail packet is a last packet of the first service object. The first packet and the second packet are identified by the switching device according to an object identification rule corresponding to the first service object. The first service object indicates a to-be-measured packet exchange phase in a service interaction process between the first device and the second device. The object identification rule is delivered by a management device to the switching device. The first packet and the second packet include a service object identifier of the first service object. Therefore, the switching device can determine, based on the service object identifier, that the first packet and the second packet belong to a same service object. In this embodiment, the switching device identifies the first service object according to the object identification rule, and can obtain the object measurement information of the first service object through measurement, where the object measurement information is associated with the service object. Therefore, when a network problem occurs, a packet exchange phase in which an exception occurs can be identified based on the object measurement information, and a service-level exception problem can be quickly delimited.

In a first implementation of the first aspect, the object identification rule includes a first target field, a first target value corresponding to the first target field, a second target field, and a second target value corresponding to the second target field. The first target value identifies the first packet, and the second target value identifies the second packet. The first target value and the second target value are different. Therefore, the switching device can distinguish between the initial packet and the tail packet of the first service object based on the first target value and the second target value.

In a second implementation of the first aspect, the first packet includes the first target value added by the first device or the second device according to the object identification rule, and the second packet includes the second target value added by the first device or the second device according to the object identification rule. Therefore, the first packet and the second packet can be identified by the switching device.

In a third implementation of the first aspect, the first packet or the second packet is a request packet, a response packet, a 1st data packet, or a last data packet in the packet exchange phase.

In a fourth implementation of the first aspect, the switching device sends the object measurement information to the management device when a difference between the second time and the first time is greater than a first threshold, and/or when the switching device detects, between the first time and the second time, that a packet exception event exists in the first service object. The packet exception event includes that packet forwarding duration is greater than a second threshold or the packet is lost. Therefore, a frequency at which the switching device sends the object measurement information can be reduced, and bandwidth occupation can be reduced. In addition, the object measurement information is associated with the packet exception event, to help identify a root cause of a network exception.

In a fifth implementation of the first aspect, the object measurement information includes a first delay, and the first delay is the difference between the second time and the first time. The first delay is a detected delay of completing the first service object. Based on different sources of the first packet and the second packet, the first time, the second time, and the first delay have different meanings.

When the first packet is from the first device and the second packet is from the second device, the first time is the time at which the switching device receives the first packet, and the second time is the time at which the switching device forwards the second packet to the first device. In this case, the first delay represents a sum of network delays of transmitting the first packet and the second packet in a network and a delay of processing, by the second device, a transaction corresponding to the first packet, or a total delay of a service.

When the first packet is from the second device and the second packet is from the first device, the first time is the time at which the switching device forwards the first packet to the first device, and the second time is the time at which the switching device receives the second packet. In this case, the first delay represents a delay of processing, by the first device, a transaction corresponding to the first packet.

When both the first packet and the second packet are from the first device, the first time is the time at which the switching device receives the first packet, and the second time is the time at which the switching device receives the second packet. In this case, the first delay represents a delay of sending the first service object by the first device.

When both the first packet and the second packet are from the second device, the first time is the time at which the switching device forwards the first packet to the first device, and the second time is the time at which the switching device forwards the second packet to the first device. In this case, the first delay represents a delay of receiving the first service obj ect by the first device. In this case, the first delay is specifically a sum of a sending delay of sending all packets of the first service object by the second device and a delay of transmission or a delay caused by transmission acceleration of all the packets of the first service object in a network.

In a sixth implementation of the first aspect, the object measurement information further includes a second delay. Further, the switching device obtains the second delay based on a third time of a third packet and the first time. The third packet is an initial packet of a second service object. The third time is a time at which the switching device receives or forwards the third packet. The second service object is a previous service object of the first service object identified by the switching device. The second service object and the first service object belong to a same service interaction process. The second delay is a difference between the first time and the third time. The second delay represents a time interval between service objects that belong to a same service interaction process, and may be used to evaluate burstness of the service object, and explain network problems such as network congestion and a delay increase that are caused by a high burst.

In a seventh implementation of the first aspect, the object measurement information includes the first time and the second time.

According to a second aspect, a network performance measurement system is provided. The system includes a management device, a switching device, a first device, and a second device, and the switching device is configured to forward a packet between the first device and the second device. The management device is configured to send an object identification rule to the switching device. The switching device is further configured to: identify a first packet and a second packet of a first service object according to the object identification rule, obtain a first time of the first packet and a second time of the second packet, and obtain, based on the first time and the second time, object measurement information corresponding to the first service object. The first time is a time at which the switching device receives or forwards the first packet, and the second time is a time at which the switching device receives or forwards the second packet. The first packet is an initial packet of the first service object, and the second packet is a tail packet of the first service object. The first service object indicates a to-be-measured packet exchange phase in a service interaction process between the first device and the second device. The first packet and the second packet include a service object identifier of the first service object.

In a first implementation of the second aspect, the object identification rule includes a first target field, a first target value corresponding to the first target field, a second target field, and a second target value corresponding to the second target field. The first target value identifies the first packet, and the second target value identifies the second packet. The first target value and the second target value are different.

In a second implementation of the second aspect, the management device is further configured to send the object identification rule to the first device and/or the second device. The first device or the second device is configured to: add the first target value to the first target field according to the object identification rule when constructing the first packet, or add the second target value to the second target field when constructing the second packet.

In a third implementation of the second aspect, the first packet or the second packet is a request packet, a response packet, a 1st data packet, or a last data packet in the packet exchange phase.

In a fourth implementation of the second aspect, the switching device is further configured to: send the object measurement information to the management device when a difference between the second time and the first time is greater than a first threshold, and/or when the switching device detects, between the first time and the second time, that a packet exception event exists in the first service object. The packet exception event includes that packet forwarding duration is greater than a second threshold or the packet is lost.

In a fifth implementation of the second aspect, the object measurement information includes a first delay, and the first delay is the difference between the second time and the first time. The first packet is from the first device, the second packet is from the second device, the first time is the time at which the switching device receives the first packet, and the second time is the time at which the switching device forwards the second packet to the first device. Alternatively, the first packet is from the second device, the second packet is from the first device, the first time is the time at which the switching device forwards the first packet to the first device, and the second time is the time at which the switching device receives the second packet. Alternatively, both the first packet and the second packet are from the first device, the first time is the time at which the switching device receives the first packet, and the second time is the time at which the switching device receives the second packet. Alternatively, both the first packet and the second packet are from the second device, the first time is the time at which the switching device forwards the first packet to the first device, and the second time is the time at which the switching device forwards the second packet to the first device.

In a sixth implementation of the second aspect, the object measurement information further includes a second delay. The switching device is further configured to obtain the second delay based on a third time of the third packet and the first time. The third packet is an initial packet of a second service object. The third time is a time at which the switching device receives or forwards the third packet. The second service object is a previous service object of the first service object identified by the switching device. The second service object and the first service object belong to a same service interaction process. The second delay is a difference between the first time and the third time.

In a seventh implementation of the second aspect, the object measurement information includes the first time and the second time.

According to a third aspect, a network performance measurement apparatus is provided. The network performance measurement apparatus may be a switching device, a management device, a first device, or a second device. The apparatus includes a processor and a memory, where the processor is coupled to the memory, and the processor is configured to: implement, based on instructions stored in the memory, a function corresponding to the switching device, the management device, the first device, or the second device in the network performance measurement system according to any one of the second aspect or the implementations of the second aspect.

According to a fourth aspect, a switching device is provided. The switching device includes an obtaining module. The obtaining module is configured to obtain a first time of a first packet and a second time of a second packet. The first time is a time at which the switching device receives or forwards the first packet, and the second time is a time at which the switching device receives or forwards the second packet. The first packet is an initial packet of a first service object, and the second packet is a tail packet of the first service object. The first packet and the second packet are identified by the switching device according to an object identification rule corresponding to the first service object. The first service object indicates a to-be-measured packet exchange phase in a service interaction process between a first device and a second device. The object identification rule is delivered by a management device to the switching device. The obtaining module is further configured to: obtain, based on the first time and the second time, the object measurement information corresponding to the first service object. The first packet and the second packet include a service object identifier of the first service object.

In a first implementation of the fourth aspect, the object identification rule includes a first target field, a first target value corresponding to the first target field, a second target field, and a second target value corresponding to the second target field. The first target value identifies the first packet, and the second target value identifies the second packet. The first target value and the second target value are different.

In a second implementation of the fourth aspect, the first packet includes the first target value added by the first device or the second device according to the object identification rule, and the second packet includes the second target value added by the first device or the second device according to the object identification rule. Therefore, the first packet and the second packet can be identified by the switching device.

In a third implementation of the fourth aspect, the first packet or the second packet is a request packet, a response packet, a 1st data packet, or a last data packet in the packet exchange phase.

In a fourth implementation of the fourth aspect, the apparatus further includes a sending module. The sending module is configured to: send the object measurement information to the management device when a difference between the second time and the first time is greater than a first threshold, and/or when the switching device detects, between the first time and the second time, that a packet exception event exists in the first service object. The packet exception event includes that packet forwarding duration is greater than a second threshold or a packet is lost.

In a fifth implementation of the fourth aspect, the object measurement information includes a first delay, and the first delay is the difference between the second time and the first time. The first delay is a detected delay of completing the first service object. Based on different sources of the first packet and the second packet, the first time, the second time, and the first delay have different meanings.

When the first packet is from the first device and the second packet is from the second device, the first time is the time at which the switching device receives the first packet, and the second time is the time at which the switching device forwards the second packet to the first device. The first delay represents a sum of network delays of transmitting the first packet and the second packet in a network and a delay of processing, by the second device, a transaction corresponding to the first packet.

When the first packet is from the second device and the second packet is from the first device, the first time is the time at which the switching device forwards the first packet to the first device, and the second time is the time at which the switching device receives the second packet. The first delay represents a delay of processing, by the first device, a transaction corresponding to the first packet.

When both the first packet and the second packet are from the first device, the first time is the time at which the switching device receives the first packet, and the second time is the time at which the switching device receives the second packet. The first delay represents a delay of processing the first service object by the first device.

When both the first packet and the second packet are from the second device, the first time is the time at which the switching device forwards the first packet to the first device, and the second time is the time at which the switching device forwards the second packet to the first device. The first delay represents a delay of processing the first service object by the second device.

In a sixth implementation of the fourth aspect, the object measurement information further includes a second delay. The obtaining module is further configured to obtain the second delay based on a third time of the third packet and the first time. The third packet is an initial packet of a second service object. The third time is a time at which the switching device receives or forwards the third packet. The second service object is a previous service object of the first service object identified by the switching device. The second service object and the first service object belong to a same service interaction process. The second delay is a difference between the first time and the third time.

In a seventh implementation of the fourth aspect, the object measurement information includes the first time and the second time.

According to a fifth aspect, a computer-readable storage medium is provided, including instructions. When the computer-readable storage medium is run on a computer, the computer is enabled to perform the network performance measurement method in any one of the first aspect or the implementations of the first aspect.

### BRIEF DESCRIPTION OF DRAWINGS

FIG. 1 is a schematic diagram of a structure of an embodiment of a network performance measurement system according to this application;
FIG. 2 is a flowchart of interaction of a data write service according to this application;
FIG. 3 is a schematic diagram of measuring network performance of a service object in a network performance measurement system according to this application;
FIG. 4 is a schematic flowchart of a first embodiment of a network performance measurement method according to this application;
FIG. 5 is a schematic flowchart of a second embodiment of a network performance measurement method according to this application;
FIG. 6 is a schematic flowchart of a third embodiment of a network performance measurement method according to this application;
FIG. 7 is a schematic diagram of a structure of an embodiment of a switching device according to this application; and
FIG. 8 is a schematic diagram of a structure of an embodiment of a network performance measurement apparatus according to this application.

### DESCRIPTION OF EMBODIMENTS

This application provides a network performance measurement method, system, and apparatus, to measure network performance of a service, and quickly delimit and identify a network exception event.

High-performance service scenarios with high concurrency and a low delay, such as storage, machine learning training, and big data analytics, require efficient data access, processing, and transmission. Performance jitters on both a host side and a network side greatly affect service performance. Consequently, users can perceive service performance deterioration.

Generally, a plurality of services are run in a data center. Currently, a network performance indicator of the data center is obtained by measuring a basic network performance indicator, and a network performance measurement result is not associated with a specific service. Specifically, a switching device in a network samples and replicates a received or forwarded packet based on a preset periodicity or a sampling rate, and adds measurement information (for example, a device identifier, ingress and egress ports, and a timestamp) to the replicated packet hop by hop. Packets of a plurality of services may pass through a same switching device, but the switching device does not identify which service the packet belongs to when sampling the packet. The switching device reports, to an analyzer, the packet to which the measurement information is added, and the analyzer may determine network performance indicators such as a forwarding path delay, a bandwidth, and a packet loss rate of the packet by analyzing the measurement information carried in the packet. Because the packets from the plurality of services are not associated with any service, network performance indicator data obtained by the analyzer is not associated with any service. In addition, because there is no association between the packets, delays measured for a plurality of packets can reflect only respective network delays, and cannot reflect an overall delay of a service (including a plurality of interactive packets). Therefore, based on these network performance measurement results, network devices such as the switching device and the analyzer cannot actively, quickly, and directly perceive which service performance deteriorates.

Further, after it is known that the service performance deteriorates, it is also difficult to identify a root cause of the service performance deterioration only based on these network performance measurement results. The service performance deterioration may be caused by a network performance jitter, a host side performance jitter, or both the network performance jitter and the host side performance jitter. However, packet-level measurement can only reflect a network performance status in a transmission process in which a packet is sent from one end and received on the other end, and cannot reflect a host side performance status. Therefore, whether the service performance deterioration is caused by the host side performance jitter or the network performance jitter cannot be determined based on the current network performance indicator, and a factor that really affects the service performance of the service cannot be quickly determined from a network performance measurement result of the entire data center.

To resolve the foregoing technical problem, this application provides the following embodiments. When a performance jitter or deterioration problem occurs in a service, a network can actively perceive a service performance change, and quickly delimit a cause of the problem, in other words, can quickly determine a cause of the service performance change.

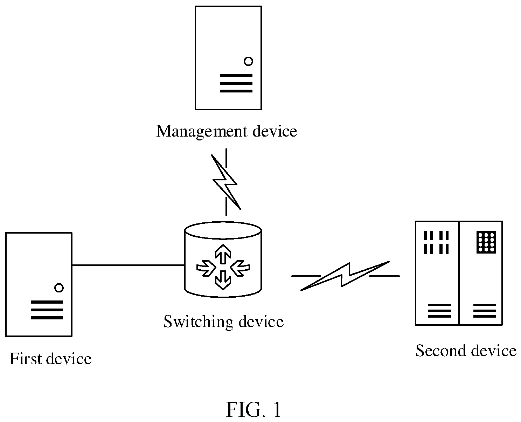

FIG. 1 is a schematic diagram of a structure of an embodiment of a network performance measurement system according to this application. In this embodiment, the network performance measurement system includes a management device, a switching device, a first device, and a second device.

The first device and the second device may be host side devices (namely, devices close to a user) in a network. For example, the first device or the second device may be a device such as a server, a storage array, a computer, or an intelligent terminal. A communication connection is established between the first device and the second device via the switching device, and the first device and the second device can perform service interaction based on the communication connection. The switching device may be a device that has a packet forwarding function, for example, a switch, a router, or a firewall.

In a possible scenario, the network performance measurement system includes one switching device, and the first device and the second device are connected to a same switching device. In other words, a packet in a service interaction process between the first device and the second device is forwarded only by one switching device.

In another possible scenario, the network performance measurement system includes at least two switching devices. The first device is connected to a first switching device in the at least two switching devices, and the second device is connected to a second switching device in the at least two switching devices. The first switching device and the second switching device are different switching devices. A packet sent by the first device is forwarded to the second device via the first switching device and the second switching device, and a packet sent by the second device is forwarded to the first device via the second switching device and the first switching device. Certainly, at least one switching device may further exist between the first switching device and the second switching device to forward the packet for service interaction between the first device and the second device.

In this application, an example in which the first device is connected to the first switching device and the second device is connected to the second switching device is used for description. That the first device is connected to the first switching device may mean that the first device is connected to the first switching device in a wired manner, for example, by using an optical fiber, a coaxial cable, or a twisted pair, or is connected to the first switching device in a wireless connection manner. To be specific, the first switching device is a first hop for forwarding the packet from the first device and a last hop for forwarding the packet to the first device, and no other switching device between the first device and the first switching device participates in forwarding the packet between the first device and the second device. A connection relationship between the second device and the second switching device is similar to this.

The management device is a device that has control and analysis functions. Specifically, the management device may deliver an object identification rule of a service object to the first device, the second device, and the first switching device and/or the second switching device, so that the first switching device and/or the second switching device can identify the service object according to the object identification rule, measure network performance of the service object to obtain object measurement information of the service object, and then report the object measurement information to the management device. The management device may further analyze service performance of the service object based on the object measurement information.

In this embodiment, the service object indicates a to-be-measured packet exchange phase in the service interaction process between the first device and the second device. The service interaction process between the first device and the second device includes an interaction process of at least one service transmitted based on the communication connection between the first device and the second device. Specifically, starting from establishing a session between the first device and the second device until the session ends, all services performed based on the session is the interaction process between the first device and the second device. For example, based on the session between the first device and the second device, the first device reads target data from the second device for a plurality of times. A process of reading the target data each time is an interaction process of one service, and a process of reading the target data for a plurality of times is the service interaction process between the first device and the second device.

To complete a service between the first device and the second device, one of first device and the second device needs to initiate a service request, and the other one makes a corresponding response in response to the service request until both the first device and the second device confirm that the service ends. This interaction process is implemented through a plurality of packet exchanges. There is an association and a sequence between a plurality of packets in a process of completing a service. This is because some of the packets are constructed and sent after packets from a peer end are received.

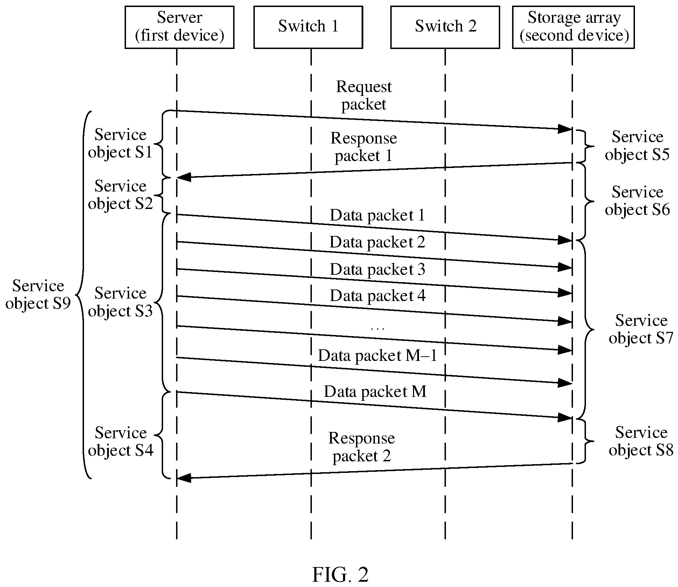

For example, FIG. 2 is a flowchart of interaction of a data write service according to this application. In FIG. 2, two host side devices are a server and a storage array respectively. A switch 1 is a switching device connected to the server, and a switch 2 is a switching device connected to the storage array. The server writes data to the storage array, and initiates a data write request to the storage array through a communication connection between the server and the storage array. First, after constructing a request packet, the server sends the request packet to the storage array. After receiving and parsing the request packet, the storage array constructs and sends, to the server, a response packet 1 corresponding to the request packet, to notify the server that the storage array has received the request packet. The server receives the response packet 1, encapsulates the data into M (where M is an integer greater than or equal to 1) data packets, and sends the M data packets to the storage array. After receiving the M data packets, the storage array constructs and sends a response packet 2 to the server, to notify the server that the storage array has received the M data packets. After the server receives the response packet 2, it may be considered that the data write service is completed, and it is confirmed that the service ends. It can be learned that there is an association and a sequence between the request packet and the response packet 1, there is an association and a sequence between the response packet 1 and the data packet, and there is an association and a sequence between the data packet and the response packet 2.

On a side of a first device or a side of a second device, packet sending or receiving means that a phase in a service ends and a next phase starts, to gradually complete the service. A specific service is accompanied by construction, sending, transmission, receiving, parsing, and the like of a packet. To be specific, an interaction process of the service includes a process of transmitting the packet between the first device and the second device, and also includes a process of processing (constructing, sending, receiving, or parsing) the packet by the first device and the second device. Therefore, an interaction process of a service may be decomposed into a plurality of packet exchange phases based on an association and a sequence between packets. A packet exchange phase may be a phase in which the first device or the second device processes a packet, or may be a phase in which the first device or the second device processes the packet and transmits the packet in a network, so that the phase in which the first device or the second device processes the packet can be separated from the interaction process of the service. It should be noted that, to enable a service object to be measured and perceived by the switching device, the packet exchange phase in this embodiment is for a single-side device. For example, in FIG. 2, a phase from sending the request packet to receiving the response packet 1 by the server may be a packet exchange phase, a phase from receiving the request packet to sending the response packet 1 by the storage array may be a packet exchange phase, a phase from sending a 1st data packet in the M data packets to sending a last data packet by the server is a packet exchange phase, and so on. However, a phase from sending the request packet by the server to receiving the request packet by the storage array, a phase from sending the response packet 1 by the storage array to sending the 1st data packet by the server, and the like are not the packet exchange phases in this embodiment.

The packets that are associated may be used to delimit a service object that can be identified and measured by the switching device and that has semantics, to implement service-level network performance measurement. The service object includes at least two packets in the packet exchange phase. In a packet exchange phase, an earliest sent or received packet is an initial packet of a corresponding service object, and a latest sent or received packet is a tail packet of the corresponding service object. The service object may be a service, to be specific, a process from sending a request packet to receiving a response packet indicating that the service ends. The service object includes a plurality of packet exchange phases. For example, FIG. 2 represents a service object of a data write service, and the service object indicates a process from sending the request packet to receiving the response packet 2 by the server. The service object may further indicate a packet exchange phase decomposed from a service interaction process. For example, in FIG. 2, the packet exchange phase from sending the request packet to receiving the response packet 1 by the server may be represented as a service object S 1, and the packet exchange phase from receiving the request packet to sending the response packet 1 by the storage array may be represented as a service object S2. The service object S1 has semantics of transmitting the request packet in the network, processing the request packet by the storage array, and transmitting the response packet 1 in the network. The service object S2 has semantics of processing the request packet by the storage array. With reference to the service object S 1 and the service object S2, a phase (namely, the service object S2) in which the storage array processes the request packet in the service object S 1 is separated, so that a phase in which the request packet and the response packet 1 are transmitted in the network can be obtained.

Therefore, in this embodiment, an initial packet and a tail packet of the service object are specific packets, and are associated in terms of a service, instead of any one of a plurality of packets exchanged between the first device and the second device or packets that are not associated in the plurality of packets.

In this embodiment, that a first switching device/second switching device identifies a service object is specifically identifying an initial packet and a tail packet of the service object. To enable the first switching device/second switching device to identify the initial packet and the tail packet of the service object from a plurality of received or forwarded packets, a management device needs to deliver an object identification rule to the first device and/or the second device, so that the first device and/or the second device constructs the initial packet and the tail packet according to the object identification rule, and the first switching device/second switching device identifies the initial packet and the tail packet according to the same object identification rule.

The management device delivers the object identification rule to at least one of the first switching device and the second switching device, and a specific switching device to which the object identification rule is delivered may be determined based on which switching device is required to measure the service object. For example, in FIG. 2, if only one or more of the service object S 1 to a service object S4 need to be measured, the object identification rule may be delivered to the switch 1 instead of the switch 2. The management device delivers the object identification rule to at least one of the first device and the second device, and a specific device to which the object identification rule is delivered may be determined based on a device that constructs the initial packet and the tail packet of the service object. For example, in FIG. 2, if the service object S 1 needs to be measured, an initial packet of the service object S1 is constructed by the server, and a tail packet of the service object S1 is constructed by the storage array, the management device delivers the object identification rule to the server and the storage array. If only the service object S3 needs to be measured, and both an initial packet and a tail packet of the service object S3 are constructed by the server, the management device may deliver the object identification rule to the server instead of the storage array. Certainly, the management device may alternatively deliver the object identification rule to both the server and the storage array.

The object identification rule may be generated by the management device after the management device receives an instruction entered by a user, or may be automatically generated by the management device according to a packet construction rule in a network protocol used in the network.

The object identification rule includes a first target field, a first target value corresponding to the first target field, a second target field, and a second target value corresponding to the second target field. The first target field indicates a position of the first target value in the packet, for example, an offset value and a length of the first target value in the packet. The second target field indicates a position of the second target value in the packet, for example, an offset value and a length of the second target value in the packet. The first target value identifies the initial packet of the service object, and the second target value identifies the tail packet of the service object. In this embodiment, to enable the first switching device/second switching device to distinguish between which packet is the initial packet of the service object and which packet is the tail packet of the service object, the first target value and the second target value are different. The first target field and the second target field may be the same or different. This is not limited in this application.

The object identification rule further includes an extracting rule and a matching rule of a service object identifier of the service object. Specifically, the object identification rule includes a third target field and a fourth target field. The third target field indicates a position of the service object identifier in the initial packet, for example, an offset value and a length of the service object identifier in the initial packet. The fourth target field indicates a position of the service object identifier in the tail packet, for example, an offset value and a length of the service object identifier in the tail packet. The service object identifier is used to associate an initial packet and a tail packet that belong to a same service object. In other words, the initial packet and the tail packet that belong to the same service object include the same service object identifier. The third target field and the fourth target field may be the same or different. This is not limited in this application.

The matching rule is used to determine, based on the service object identifier extracted from the third target field of the initial packet and the service object identifier extracted from the fourth target field of the tail packet, whether the initial packet and the tail packet belong to the same service object. For example, the matching rule may be that the two service object identifiers are equal through direct matching. To be specific, if the service object identifier extracted from the third target field of the initial packet and the service object identifier extracted from the fourth target field of the tail packet are completely the same, it is considered that the initial packet and the tail packet belong to the same service object. For another example, the matching rule may alternatively be that the two service object identifiers are equal after a byte ranking is changed, and is used when a byte ranking of the service object identifier extracted from the third target field of the initial packet and a byte ranking of the service object identifier extracted from the fourth target field of the tail packet are different. To be specific, if the byte ranking of one of the service object identifiers is that a high-order byte is before a low-order byte, and the byte ranking of the other one is that a low-order byte is before a high-order byte, the byte ranking of one of the service object identifiers needs to be changed, so that the byte rankings of the two service object identifiers are the same. Then, the two service object identifiers are matched to check whether the two service object identifiers are equal. If the two service object identifiers are equal, it is considered that the initial packet and the tail packet belong to the same service object. For still another example, the matching rule may alternatively be that the two service object identifiers are equal after a value is adjusted. For example, the service object identifier extracted from the third target field of the initial packet is increased or decreased by a preset value, and then is compared with the service object identifier extracted from the fourth target field of the tail packet. If the two service object identifiers are equal, it is considered that the initial packet and the tail packet belong to the same service obj ect.

The first target field, the second target field, the third target field, or the fourth target field may be identified in a packet header, or may be identified in a packet payload. This is not limited in this application.

The first device/second device adds a service object identifier, the first target value, and the second target value to an initial packet and a tail packet that correspond to a service object that has a measurement requirement. For example, in FIG. 2, if the service object S1 or the service object S5 needs to be measured, the first device adds the first target value and the service object identifier to the request packet, and the second device adds the second target value and the service object identifier to the response packet 1. If the service object S3 or a service object S7 needs to be measured, the first device adds the first target value and the service object identifier to a data packet 1, and adds the second target value and the service object identifier to a data packet M.

Specifically, the first target value in the initial packet is added by the first device/second device to the first target field when the first device/second device constructs the packet. The second target value in the tail packet is added by the first device/second device to the second target field when the first device/second device constructs the packet. Therefore, the initial packet and the tail packet of the service object can be identified by the first switching device and/or the second switching device. There may be two cases in which the first device/second device adds the first target value and the second target value to the packet.

### Case 1: Add the values according to a corresponding packet protocol

Some standard protocols or proprietary protocols have rules for different types of packets. The rule specifies that a specific field value is added to a specific field to indicate a packet type. For example, for a cmd packet (request packet) and a response packet (response packet) in an NVMe over fabric protocol, there is a clear packet feature rule in the two packets, to be specific, base transport headers (base transport headers, BTHs) of the two packets include specific operation code (operation code, OPCode) field values. In other words, this type of packet naturally carries an explicit identification feature, to be specific, the specific field and the specific field value, that can be identified and distinguished from other packets.

In this case, the initial packet and/or the tail packet of the service object are/is packets/a packet carrying the explicit identification feature. When generating the object identification rule of the service object, the management device uses the specific field specified in the protocol as the first target field and/or the second target field in the object identification rule, and uses the specific field value as the first target value and/or the second target value in the object identification rule.

### Case 2: Add the values according to the object identification rule

For a packet that does not have an explicit identification feature in the packet exchange phase but needs to be used as the initial packet or the tail packet of the service object, the first device/second device adds the first target value to a first target field of the packet according to the object identification rule, or adds the second target value to a second target field of the packet, to obtain a packet that can be identified by the first switching device and/or the second switching device.

In this case, the first target field and the second target field may be reserved fields specified in the packet. The reserved field is a reserved, unused, and customized field. Therefore, a case in which an irrelevant packet is incorrectly identified as the initial packet or the tail packet of the service object due to a conflict with another packet field is avoided, thereby improving accuracy of identifying the service object.

The service object identifier in the initial packet is added to the third target field according to the object identification rule when the first device/second device constructs the initial packet. The service object identifier in the tail packet is added to the fourth target field according to the object identification rule when the first device/second device constructs the tail packet. The third target field and the fourth target field may be the reserved fields specified in the packet.

The service object identifier in the initial packet is generated by the first device/second device. For initial packets of different service objects, the first device and the second device generate different service object identifiers, so that the first switching device/second switching device can distinguish between the different service objects based on the different service object identifiers. The service object identifier in the tail packet may reuse the service object identifier in the initial packet. Therefore, an initial packet and a tail packet that belong to a same service object include a same service object identifier. If an initial packet and a tail packet of a service object are from the first device and the second device that are different, one device, of the first device and the second device, that receives the initial packet extracts a service object identifier from the initial packet according to an object identification rule, and when constructing the tail packet, adds, to a fourth target field, the service object identifier extracted from the initial packet. Certainly, when the first device and the second device respectively generate an initial packet and a tail packet of a same service object, a service object identifier in the initial packet and a service object identifier in the tail packet may alternatively be different, and there is a mapping relationship between the two service object identifiers. For example, after a byte ranking is changed, or after the service object identifier is increased or decreased by a preset value, the two service object identifiers are equal.

In this embodiment, the object identification rule may be a general rule. To be specific, initial packets and tail packets of a plurality of service objects are constructed based on the same object identification rule, different initial packets have a same first target field, first target value, and third target field, and different tail packets have a same second target field, second target value, and fourth target field, provided that service object identifiers of initial packets and tail packets of different service objects are different. Therefore, complexity of identifying the service object by the first switching device and/or the second switching device can be reduced. Certainly, a service object rule may also be configured for each type of service object. This is not limited in this application.

In some possible application scenarios, when a same initial packet or tail packet belongs to at least two service objects, at least two object identification rules are needed. In this embodiment, two object identification rules including a first object identification rule and a second object identification rule are used as an example for description. Third target fields and/or fourth target fields in the first object identification rule and the second object identification rule are different. If a same packet is an initial packet that belongs to two service objects, for example, in FIG. 2, both the initial packet of the service object S 1 and an initial packet of a service object S9 are the request packet, the third target fields in the first object identification rule and the second object identification rule are different, and first target fields, second target fields, or the fourth target fields may be the same or different. Therefore, when constructing the initial packet, the first device/second device may add service object identifiers of the two service objects to the packet without causing a conflict. If a same packet is a tail packet that belongs to two service objects, for example, in FIG. 2, both a tail packet of a service object S8 and a tail packet of a service object S9 are the response packet 2, the fourth target fields in the first object identification rule and the second object identification rule are different, and first target fields, second target fields, or the third target fields may be the same or different. Therefore, when constructing the tail packet, the first device/second device may add service object identifiers of the two service objects to the packet without causing a conflict.

If a same packet is a tail packet of a service object and is an initial packet of another service object, for example, in FIG. 2, the response packet 1 is a tail packet of the service object S5 and an initial packet of the service object S2, a conflict may be avoided in two manners. For example, a same object identification rule is used, but in the object identification rule, a third target field and a fourth target field are different, and a first target field and a second target field are different. For another example, two different object identification rules are used: a first object identification rule and a second object identification rule. A third target field in the first object identification rule and a fourth target field in the second object identification rule are different, and a first target field in the first object identification rule and a second target field in the second object identification rule are different.

The following uses an example in which the first switching device identifies and measures a service object according to an object identification rule for description. The second switching device is similar to this. Therefore, details are not described again.

The first switching device receives the object identification rule, where the object identification rule includes a first target field, a first target value, a second target field, and a second target value. Optionally, the object identification rule may further include a third target field, a fourth target field, and a matching rule. The first switching device parses received or forwarded packets, and detects whether a first target field of each packet is the first target value, and whether a second target field of the packet is the second target value. If it is determined, through detection, that a first target field of a first packet in the received or forwarded packets is the first target value, it is determined that the first packet is an initial packet. The first switching device extracts a service object identifier of a first service object from a third target field of the first packet, and records the service object identifier of the first service object and a first time of the first packet. The first time of the first packet is a time at which the first switching device receives or forwards the first packet. If it is determined, through detection, that a second target field of a second packet in the received or forwarded packets is the second target value, it may be determined that the second packet is a tail packet. The first switching device extracts a service object identifier from a fourth target field of the second packet. If the first switching device determines, according to the matching rule, that the service object identifier in the second packet matches the service object identifier in the first packet, the first switching device determines that the second packet is a tail packet of the first service object. The first switching device obtains a second time at which the second packet is received or forwarded. The first switching device can obtain object measurement information of the first service object based on the first time and the second time.

In a possible scenario, the first switching device receives two service object rules, namely, a first service object rule and a second service object rule, and the first switching device simultaneously uses the two service object rules to identify the received or forwarded packets. If a packet is an initial packet of a service object and is a tail packet of another service object, in other words, the packet includes two service object identifiers: a first service object identifier and a second service object identifier, and two target values: a first target value and a second target value, a service object identifier and a target value that are extracted by the first switching device according to the same service object rule belong to a same service object. For example, if the first service object identifier and the first target value are extracted from the packet according to the first service object rule, the packet is an initial packet of a service object corresponding to the first service object identifier, and a first time corresponding to the first service object identifier is recorded. If the second service object identifier and the second target value are extracted from the packet according to the second service object rule, the packet is a tail packet of a service object corresponding to the second service object identifier, and a second time corresponding to the second service object identifier is recorded. When initial packets or tail packets of the two service objects are a same packet, an identification method is similar to this.

The object measurement information of the first service object may include a first delay, and the first delay is a difference between the second time and the first time. The first delay may indicate a delay of completing the first service object. The object measurement information further includes the service object identifier of the first service object, and an association relationship between the service object identifier and the object measurement information.

The first packet of the first service object may be from the first device, or may be from the second device. The second packet may be from the first device, or may be from the second device. Based on sources of the first packet and the second packet, and types of the first packet and the second packet, the first service object and the first delay have different meanings Specifically, the following four cases may be included.

Case a: The first packet is from the first device, and the second packet is from the second device.

In this case, considering that a delay of forwarding the first packet and the second packet by the first switching device is a network delay, to improve accuracy of the first delay, the first time may be the time at which the first switching device receives the first packet, and the second time may be the time at which the first switching device forwards the second packet to the first device.

If the first service object is a service, the first service object includes a plurality of packet exchange phases, in other words, the first packet is a request packet, and the second packet is a response packet indicating that the service ends, the first delay is a total delay of completing the service. The service object S9 in FIG. 2 is used as an example.

If the first service object indicates a packet exchange phase of a service, the first delay is a sum of delays of transmitting the first packet and the second packet in a network and a delay of processing the first packet by the second network device. Specifically, the first device sends the first packet, the first switching device receives and forwards the first packet, and the second switching device forwards the first packet to the second device after receiving the first packet. After receiving the first packet, the second device parses the first packet, and constructs the second packet corresponding to the first packet. The second device sends the second packet, the second switching device receives and forwards the second packet, and the first switching device receives and sends the second packet to the first device. The service object S 1, the service object S4, or a service object S6 in FIG. 1 is used as an example.

It should be noted that, in this case, the first delay does not include delays of transmitting the first packet and the second packet between the first device and the first switching device. Because a distance between the first device and the first switching device is short, the delays of transmitting the first packet and the second packet between the first device and the first switching device are small, and this part of delays may be ignored. Certainly, in a scenario that requires high precision of the first delay, the delays of transmitting the first packet and the second packet between the first device and the first switching device may also be measured, and this part of delays may be added to the first delay. For example, the delay of transmitting the first packet or the second packet between the first device and the first switching device may be obtained by dividing a length of a cable connecting the first device and the first switching device by a speed of light. For another example, the first device adds, to the first packet, a timestamp for sending the first packet, and the first switching device may obtain, through calculation based on the first time and the timestamp in the first packet, the delay of transmitting the first packet between the first device and the first switching device. Because a distance for transmitting the second packet from the first switching device to the first device is the same as a distance for transmitting the first packet from the first device to the first switching device, it may be considered that the delay of transmitting the first packet between the first device and the first switching device is the same as the delay of transmitting the second packet from the first switching device to the first device.

Case b: The first packet is from the second device, and the second packet is from the first device.

In this case, the first time may be the time at which the first switching device forwards the first packet to the first device, and the second time may be the time at which the first switching device receives the second packet. The first service object indicates a packet exchange phase of a service, and the first delay is a delay of processing the first packet by the first device. The service object S5, the service object S8, or the service object S2 in FIG. 2 is used as an example.

It should be noted that, in this case, the first delay further includes delays of transmitting the first packet and the second packet between the first device and the first switching device. Similarly, this part of delays may be ignored, and it is considered that the first delay is a processing delay of the first device. Certainly, the delays of transmitting the first packet and the second packet between the first device and the first switching device may alternatively be calculated according to the foregoing calculation method, and this part of delays are subtracted from the first delay.

Case c: Both the first packet and the second packet are from the first device.

In this case, the first time may be the time at which the first switching device receives the first packet, and the second time may be the time at which the first switching device receives the second packet. The first delay may be approximately considered as a difference obtained by subtracting a time at which the first device sends the first packet from a time at which the first device sends the second packet.

The first service object indicates a packet exchange phase, and may specifically indicate a data sending phase. For example, the first device sends N data packets to the second device, where the first packet is a 1st data packet in the N data packets, and the second packet is a last data packet in the N data packets. The first delay is a delay of sending the N data packets by the first device. The service object S3 in FIG. 2 is used as an example.

Certainly, when the first device needs to send a large quantity of data packets, the data sending phase may be further decomposed into at least two service objects. For example, the first packet of the first service object is the 1st data packet in the N data packets, and the second packet is a Kth data packet in the N data packets. K is greater than 1 and less than N. A first packet of a second service object is a (K+1)th data packet, and a second packet is an Nth data packet in the N data packets.

Case d: Both the first packet and the second packet are from the second device.

In this case, the first time may be the time at which the first switching device forwards the first packet, and the second time may be the time at which the first switching device forwards the second packet. The first delay may be approximately considered as a difference obtained by subtracting a time at which the first device receives the first packet from a time at which the first device receives the second packet.

The first service object indicates a packet exchange phase, and may specifically indicate a data receiving phase. For example, the first device receives N data packets from the second device, the first packet is a 1st data packet in the N data packets, and the second packet is an Nth data packet in the N data packets. The first delay is a delay of receiving the N data packets by the first device. The service object S7 in FIG. 2 is used as an example.

In the foregoing four cases, the first switching device needs to determine, based on the sources of the first packet and the second packet, whether the first time and the second time are receiving times or forwarding times. The first switching device may determine, based on a port for receiving the first packet and the second packet, whether the first packet and the second packet are from the first device or the second device. The first switching device may further learn a network topology through a link layer discovery protocol (Link Layer Discovery Protocol, LLDP), and determine, based on the network topology, whether the first packet and the second packet are from the first device or the second device when receiving the first packet and the second packet.

Optionally, the object measurement information may further include a second delay. The second delay indicates a time interval between the first service object and the second service object. The second service object is a previous service object of the first service object received by the first switching device, and the second service object and the first service object belong to a same service interaction process. Specifically, the first switching device obtains a third time of a third packet of the second service object, and subtracts the third time from the first time to obtain the second delay. The third packet is an initial packet of the second service object, and the third time is a time at which the first switching device receives or forwards the third packet. The second delay may be used to evaluate burstness of a service object. If a burst is high, network congestion may be easily caused or a storage processing delay may be increased. Based on the second delay, an operation and maintenance phenomenon such as congestion and a delay increase may be explained and assisted in identification.

Optionally, the object measurement information may further include the first time and the second time. An exception event that occurs between the first time and the second time may be obtained based on the first time and the second time, and association analysis may be performed on the exception event and the service object, to delimit a problem.

In some implementations, the first switching device may not calculate the first delay, but report the first time and the second time as the measurement information to the management device, so that the management device calculates the first delay based on the first time and the second time, to reduce calculation pressure of the first switching device.

After obtaining the object measurement information, the first switching device reports the object measurement information to the management device in a plurality of manners.

For example, each time the first switching device obtains object measurement information of a service object through measurement, the first switching device reports the object measurement information of the service object to the management device.

For another example, the first switching device may periodically report the object measurement information of the service object to the management device.

For still another example, to reduce occupation of a bandwidth resource between the first switching device and the management device, the first switching device reports exception information of the object measurement information to the management device only when the first switching device perceives a network exception. For example, when the first delay of the first service object is greater than a first threshold, the first switching device marks the object measurement information of the first service object as an exception and reports the object measurement information to the management device. Alternatively, when the first switching device detects, between the first time and the second time, that a packet exception event exists, for example, packet forwarding duration is greater than a second threshold or the packet is lost, the first switching device reports the object measurement information of the first service object and the packet exception event to the management device together, so that the management device analyzes, based on the object measurement information and the packet exception event, impact of the packet exception event on the first service object. Alternatively, when the first delay of the first service object is greater than a first threshold, and the first switching device detects, between the first time and the second time, that a packet exception event exists, the first switching device marks the object measurement information of the first service object as an exception and reports the object measurement information and the packet exception event to the management device together, so that the management device analyzes whether a first service performance jitter is caused by the packet exception event.

In this embodiment, a service object is delimited, and network performance of the service object is measured to obtain object measurement information of the service object. Therefore, service-level network performance measurement is implemented. When the object measurement information indicates an exception, the first switching device and the management device can actively perceive a service performance change, and further analyze a cause of the service performance change. Because the service object may be a packet exchange phase that has semantics and that is decomposed from a service interaction process, a host side processing phase is separated from the service interaction process, and object measurement information of this type of service object can directly reflect a host side processing delay. When the object measurement information indicates an exception, it may be determined that the service performance change is caused by a host side jitter. Therefore, a service performance exception is quickly delimited. For example, in FIG. 2, if object measurement information of the service object S5 is abnormal, it may be considered that a performance jitter on a side of the storage array may cause the service performance exception; and if object measurement information of the service object S2 is abnormal, it may be considered that a performance jitter on a side of the server may cause the service performance exception.

Further, the management device may determine, with reference to object measurement information of two service objects measured by two switching devices in a same service, whether a network side is abnormal. For example, in FIG. 2, the service object S1 and the service object S5 have a same initial packet, tail packet, and service object identifier. After the switch 1 and the switch 2 respectively report object measurement information of the service object S1 and the object measurement information of the service object S5 to the management device, the management device may associate the object measurement information of the service object S1 with the object measurement information of the service object S5 based on the service object identifier, and subtract a first delay of the service object S5 from a first delay of the service object S 1, to obtain a sum of network delays of transmitting the request packet and the response packet 1 in the network. If the sum of the network delays is greater than a third threshold, it may be determined that a network side jitter causes the service performance change. Therefore, the service performance exception is simply and quickly delimited. In FIG. 2, the service object S2 and the service object S6 are similar to this, and the service object S4 and the service object S8 are similar to this.

For another example, a first delay of the service object S3 represents a delay of sending the M data packets by the server, and a first delay of the service object S7 represents a delay of receiving the M data packets by the storage array. The first delay of the service object S7 is specifically a sum of the delay of sending the M data packets by the server and a delay of transmission and a delay caused by transmission of the M data packets in the network. The management device may associate object measurement information of the service object S3 with object measurement information of the service object S7 based on the service object identifier, and subtract the first delay of the service object S3 from the first delay of the service object S7. If an obtained value is a positive value, it indicates that transmission of the M data packets in the network is delayed; or if an obtained value is a negative value, it indicates that transmission of the M data packets in the network is accelerated.

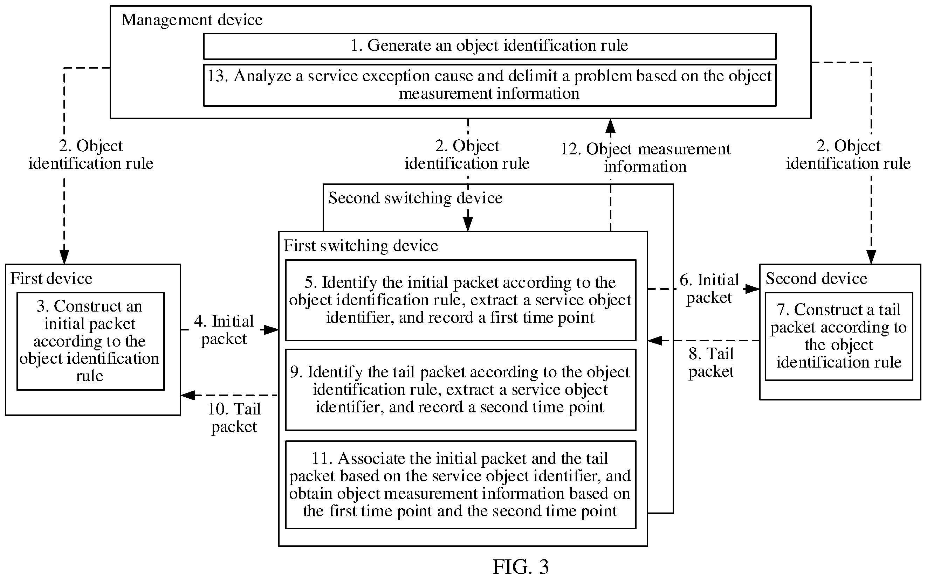

To more clearly describe a working process of measuring a service object by the management device, the first device, the second device, the first switching device, and the second switching device in the network performance measurement system of this application, in this embodiment, a scenario in which the first device constructs an initial packet of the service object, the second device constructs a tail packet of the service object, and the first switching device identifies the service object is used as an example for description. FIG. 3 is a schematic diagram of measuring network performance of a service object in a network performance measurement system according to this application. It may be understood that this method is also applicable to a scenario in which a first device/second device constructs an initial packet and a tail packet, a scenario in which the second device constructs the initial packet and the first device constructs the tail packet, or the like. A procedure of measuring network performance of a service object in the network performance measurement system is as follows.
1. A management device generates an object identification rule.
2. The management device delivers the object identification rule to the first device, the second device, and at least one of a first switching device and a second switching device.
3. The first device constructs an initial packet of the service object according to the object identification rule.
4. The first device sends the initial packet to the second device.
5. The first switching device identifies the initial packet according to the object identification rule, extracts a service object identifier from the initial packet, and records a first time at which the initial packet is received.
6. The first switching device forwards the initial packet to the second device.
7. The second device constructs a tail packet of the service object according to the object identification rule.
8. The second device sends the tail packet to the first device.
9. The first switching device identifies the tail packet according to the object identification rule, extracts a service object identifier from the tail packet, and records a second time at which the tail packet is forwarded to the first device.
10. The first switching device forwards the tail packet to the first device.
11. The first switching device associates the initial packet and the tail packet of the service object based on the service object identifier, and obtains object measurement information based on the first time and the second time.
12. The first switching device sends the object measurement information to the management device.
13. Analyze a service exception cause and delimit a problem based on the object measurement information.

For specific implementation of the foregoing procedure, refer to operations corresponding to the management device, the first device, the second device, the first switching device, and the second switching device in embodiments of the network performance measurement system. Therefore, details are not described herein again.

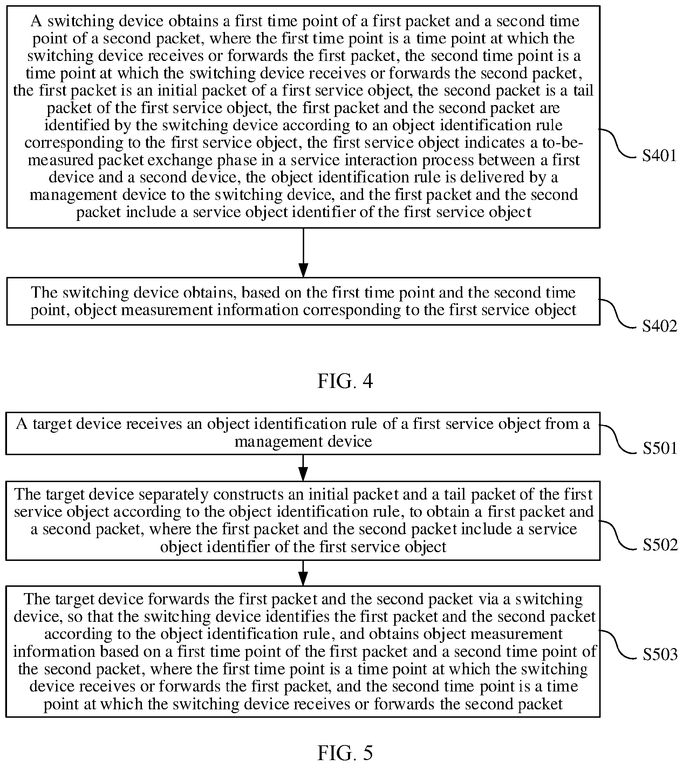

FIG. 4 is a schematic flowchart of a first embodiment of a network performance measurement method according to this application. This embodiment is executed by a switching device. The switching device is configured to: forward a packet between a first device and a second device, for example, forward a packet from the first device to the second device, and forward a packet from the second device to the first device. This embodiment includes step S401 and step S402.

S401: The switching device obtains a first time of a first packet and a second time of a second packet, where the first time is a time at which the switching device receives or forwards the first packet, the second time is a time at which the switching device receives or forwards the second packet, the first packet is an initial packet of a first service object, the second packet is a tail packet of the first service object, the first packet and the second packet are identified by the switching device according to an object identification rule corresponding to the first service object, the first service object indicates a to-be-measured packet exchange phase in a service interaction process between the first device and the second device, the object identification rule is delivered by a management device to the switching device, and the first packet and the second packet include a service object identifier of the first service object.

S402: The switching device obtains, based on the first time and the second time, object measurement information corresponding to the first service object.

For details of step S401 and step S402, refer to corresponding operations performed by the switching device in the network performance measurement system. Therefore, details are not described herein again.

FIG. 5 is a schematic flowchart of a second embodiment of a network performance measurement method according to this application. This embodiment is executed by a target device. The target device includes a first device and a second device. This embodiment includes step S501 to step S503.

S501: The target device receives an object identification rule of a first service object from a management device.

S502: The target device separately constructs an initial packet and a tail packet of the first service object according to the object identification rule, to obtain a first packet and a second packet, where the first packet and the second packet include a service object identifier of the first service object.

S503: The target device forwards the first packet and the second packet via a switching device, so that the switching device identifies the first packet and the second packet according to the object identification rule, and obtains object measurement information based on a first time of the first packet and a second time of the second packet, where the first time is a time at which the switching device receives or forwards the first packet, and the second time is a time at which the switching device receives or forwards the second packet.

For details of step S501 to step S503, refer to corresponding operations performed by the first device and the second device in the network performance measurement system. Therefore, details are not described herein again.

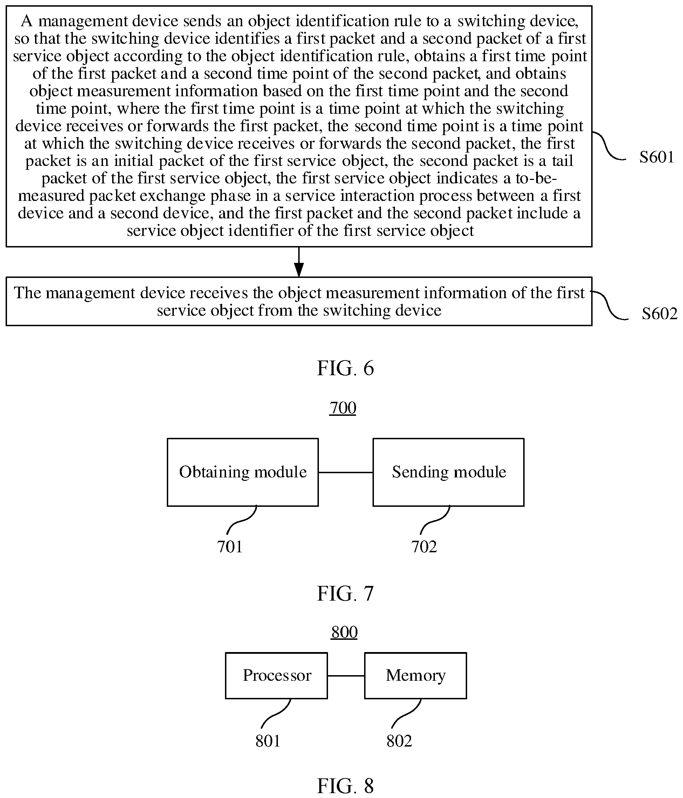

FIG. 6 is a schematic flowchart of a third embodiment of a network performance measurement method according to this application. This embodiment is executed by a management device. This embodiment includes step S601 and step S602.

S601: The management device sends an object identification rule to a switching device, so that the switching device identifies a first packet and a second packet of a first service object according to the object identification rule, obtains a first time of the first packet and a second time of the second packet, and obtains object measurement information based on the first time and the second time, where the first time is a time at which the switching device receives or forwards the first packet, the second time is a time at which the switching device receives or forwards the second packet, the first packet is an initial packet of the first service object, the second packet is a tail packet of the first service object, the first service object indicates a to-be-measured packet exchange phase in a service interaction process between the first device and the second device, and the first packet and the second packet include a service object identifier of the first service obj ect.

S602: The management device receives the object measurement information of the first service object from the switching device.

For details of step S601 and step S602, refer to corresponding operations performed by the management device in the network performance measurement system. Therefore, details are not described herein again. Further, the management device obtains, based on the object policy information of the first service object, network performance corresponding to the first service obj ect.

FIG. 7 is a schematic diagram of a structure of an embodiment of a switching device according to this application. The switching device 700 includes:
an obtaining module 701, configured to obtain a first time of a first packet and a second time of a second packet, where the first time is a time at which the switching device receives or forwards the first packet, the second time is a time at which the switching device receives or forwards the second packet, the first packet is an initial packet of a first service object, the second packet is a tail packet of the first service object, the first packet and the second packet are identified by the switching device according to an object identification rule corresponding to the first service object, the first service object indicates a to-be-measured packet exchange phase in a service interaction process between a first device and a second device, and the object identification rule is delivered by a management device to the switching device. The first packet and the second packet include a service object identifier of the first service object.

The obtaining module 701 is further configured to obtain, based on the first time and the second time, object measurement information corresponding to the first service object.

In some possible implementations, the first packet and the second packet include the service object identifier of the first service object, and the service object identifier is used to associate the first packet and the second packet.

In some possible implementations, the object identification rule includes a first target field, a first target value corresponding to the first target field, a second target field, and a second target value corresponding to the second target field, where the first target value identifies the first packet, the second target value identifies the second packet, and the first target value and the second target value are different.

In some possible implementations, the first packet includes the first target value added by the first device or the second device according to the object identification rule, and the second packet includes the second target value added by the first device or the second device according to the object identification rule.

In some possible implementations, the first packet or the second packet is a request packet, a response packet, a 1st data packet, or a last data packet in the packet exchange phase.

In some possible implementations, the switching device 700 further includes:
a sending module 702, configured to: send, by the switching device, the object measurement information to the management device when a difference between the second time and the first time is greater than a first threshold, and/or when the switching device detects, between the first time and the second time, that a packet exception event exists in the first service object, where the packet exception event includes that packet forwarding duration is greater than a second threshold or the packet is lost.

In some possible implementations, the object measurement information includes a first delay, and the first delay is the difference between the second time and the first time. The first packet is from the first device, the second packet is from the second device, the first time is the time at which the switching device receives the first packet, and the second time is the time at which the switching device forwards the second packet to the first device; the first packet is from the second device, the second packet is from the first device, the first time is the time at which the switching device forwards the first packet to the first device, and the second time is the time at which the switching device receives the second packet; both the first packet and the second packet are from the first device, the first time is the time at which the switching device receives the first packet, and the second time is the time at which the switching device receives the second packet; or both the first packet and the second packet are from the second device, the first time is the time at which the switching device forwards the first packet to the first device, and the second time is the time at which the switching device forwards the second packet to the first device.

In some possible implementations, the object measurement information further includes a second delay. The obtaining module 701 is further configured to obtain the second delay based on a third time of a third packet and the first time, where the third packet is an initial packet of a second service object, the third time is a time at which the switching device receives or forwards the third packet, the second service object is a previous service object of the first service object identified by the switching device, the second service object and the first service object belong to a same service interaction process, and the second delay is a difference between the first time and the third time.

In some possible implementations, the object measurement information includes the first time and the second time.

FIG. 8 is a schematic diagram of a structure of an embodiment of a network performance measurement apparatus according to this application. The network performance measurement apparatus 800 includes a processor 801 and a memory 802. The processor 801 is coupled to the memory 802, the memory 802 is configured to store instructions, and the processor 801 is configured to execute the instructions stored in the memory 802, to perform any network performance measurement method in FIG. 4 to FIG. 6.

The network performance measurement apparatus 800 may be a switching device, a management device, a first device, or a second device in a network performance measurement system.

This application further provides a computer-readable storage medium, and the computer-readable storage medium stores a computer program. When the computer program is executed by a computer, a network performance measurement method procedure in any one of the foregoing method embodiments is implemented.

A person skilled in the art may clearly understand that, for a purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely schematic. For example, the division into the units is merely logical function division. In actual application, there may be another division manner. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electronic form or another form.

The units described as separate parts may or may not be physically separate, and parts displayed as units may or may not be physical units, and may be located at one location, or may be distributed on a plurality of network units. Some or all of the units may be selected based on an actual requirement to achieve an objective of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, some or all of the technical solutions of this application may be embodied in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

## Claims

1. A network performance measurement method, wherein the method is applied to a switching device, the switching device is configured to forward a packet between a first device and a second device, and the method comprises:
obtaining, by the switching device, a first time of a first packet and a second time of a second packet, wherein the first time is a time at which the switching device receives or forwards the first packet, the second time is a time at which the switching device receives or forwards the second packet, the first packet is an initial packet of a first service object, the second packet is a tail packet of the first service object, the first packet and the second packet are identified by the switching device according to an object identification rule corresponding to the first service object, the first service object indicates a to-be-measured packet exchange phase in a service interaction process between the first device and the second device, the object identification rule is delivered by a management device to the switching device, and the first packet and the second packet comprise a service object identifier of the first service object; and
obtaining, by the switching device, based on the first time and the second time, object measurement information corresponding to the first service object.

2. The method according to claim 1, wherein the object identification rule comprises a first target field, a first target value corresponding to the first target field, a second target field, and a second target value corresponding to the second target field, the first target value identifies the first packet, the second target value identifies the second packet, and the first target value and the second target value are different.

3. The method according to claim 2, wherein the first packet comprises the first target value added by the first device or the second device according to the object identification rule, and the second packet comprises the second target value added by the first device or the second device according to the object identification rule.

4. The method according to any one of claims 1 to 3, wherein the first packet or the second packet is a request packet, a response packet, a 1st data packet, or a last data packet in the packet exchange phase.

5. The method according to any one of claims 1 to 4, wherein the method further comprises:
sending, by the switching device, the object measurement information to the management device when a difference between the second time and the first time is greater than a first threshold, and/or when the switching device detects, between the first time and the second time, that a packet exception event exists in the first service object, wherein the packet exception event comprises that packet forwarding duration is greater than a second threshold or the packet is lost.

6. The method according to any one of claims 1 to 5, wherein the object measurement information comprises a first delay, and the first delay is the difference between the second time and the first time; and
the first packet is from the first device, the second packet is from the second device, the first time is the time at which the switching device receives the first packet, and the second time is the time at which the switching device forwards the second packet to the first device;
the first packet is from the second device, the second packet is from the first device, the first time is the time at which the switching device forwards the first packet to the first device, and the second time is the time at which the switching device receives the second packet;
both the first packet and the second packet are from the first device, the first time is the time at which the switching device receives the first packet, and the second time is the time at which the switching device receives the second packet; or
both the first packet and the second packet are from the second device, the first time is the time at which the switching device forwards the first packet to the first device, and the second time is the time at which the switching device forwards the second packet to the first device.

7. The method according to claim 6, wherein the object measurement information further comprises a second delay, and the method further comprises:
obtaining, by the switching device, the second delay based on a third time of a third packet and the first time, wherein the third packet is an initial packet of a second service object, the third time is a time at which the switching device receives or forwards the third packet, the second service object is a previous service object of the first service object identified by the switching device, the second service object and the first service object belong to a same service interaction process, and the second delay is a difference between the first time and the third time.

8. The method according to any one of claims 1 to 7, wherein the object measurement information comprises the first time and the second time.

9. A network performance measurement system, wherein the system comprises a management device, a switching device, a first device, and a second device, and the switching device is configured to forward a packet between the first device and the second device;
the management device is configured to send an object identification rule to the switching device; and
the switching device is further configured to: identify a first packet and a second packet of a first service object according to the object identification rule, obtain a first time of the first packet and a second time of the second packet, and obtain, based on the first time and the second time, object measurement information corresponding to the first service object, wherein the first packet and the second packet comprise a service object identifier of the first service object, the first time is a time at which the switching device receives or forwards the first packet, the second time is a time at which the switching device receives or forwards the second packet, the first packet is an initial packet of the first service object, the second packet is a tail packet of the first service object, and the first service object indicates a to-be-measured packet exchange phase in a service interaction process between the first device and the second device.

10. The system according to claim 9, wherein the object identification rule comprises a first target field, a first target value corresponding to the first target field, a second target field, and a second target value corresponding to the second target field, the first target value identifies the first packet, the second target value identifies the second packet, and the first target value and the second target value are different.

11. The system according to claim 10, wherein
the management device is further configured to send the object identification rule to the first device and/or the second device; and
the first device or the second device is configured to: add the first target value to the first target field according to the object identification rule when constructing the first packet, or add the second target value to the second target field when constructing the second packet.

12. The system according to any one of claims 9 to 11, wherein the first packet or the second packet is a request packet, a response packet, a 1st data packet, or a last data packet in the packet exchange phase.

13. The system according to any one of claims 9 to 12, wherein
the switching device is further configured to: send the object measurement information to the management device when a difference between the second time and the first time is greater than a first threshold, and/or when the switching device detects, between the first time and the second time, that a packet exception event exists in the first service object, wherein the packet exception event comprises that packet forwarding duration is greater than a second threshold or the packet is lost.

14. The system according to any one of claims 9 to 13, wherein the object measurement information comprises a first delay, and the first delay is the difference between the second time and the first time; and
the first packet is from the first device, the second packet is from the second device, the first time is the time at which the switching device receives the first packet, and the second time is the time at which the switching device forwards the second packet to the first device;
the first packet is from the second device, the second packet is from the first device, the first time is the time at which the switching device forwards the first packet to the first device, and the second time is the time at which the switching device receives the second packet;
both the first packet and the second packet are from the first device, the first time is the time at which the switching device receives the first packet, and the second time is the time at which the switching device receives the second packet; or
both the first packet and the second packet are from the second device, the first time is the time at which the switching device forwards the first packet to the first device, and the second time is the time at which the switching device forwards the second packet to the first device.

15. The system according to claim 14, wherein the object measurement information further comprises a second delay; and
the switching device is further configured to obtain the second delay based on a third time of a third packet and the first time, wherein the third packet is an initial packet of a second service object, the third time is a time at which the switching device receives or forwards the third packet, the second service object is a previous service object of the first service object identified by the switching device, the second service object and the first service object belong to a same service interaction process, and the second delay is a difference between the first time and the third time.

16. The system according to any one of claims 9 to 15, wherein the object measurement information comprises the first time and the second time.

17. A network performance measurement apparatus, wherein the apparatus comprises a processor and a memory, the processor is coupled to the memory, and the processor is configured to execute instructions stored in the memory, to implement a function corresponding to the switching device, the management device, the first device, or the second device in the network performance measurement system according to any one of claims 9 to 16.

18. A computer-readable storage medium, comprising instructions, wherein when the computer-readable storage medium is run on a computer, the computer is enabled to perform the network performance measurement method according to any one of claims 1 to 8.
